# EUROPÄISCHE PATENTANMELDUNG

(11) **EP 3 150 893 A1**
(43) Veröffentlichungstag der Anmeldung: **05.04.2017**
(21) Anmeldenummer: 15187322.1
(22) Anmeldetag: 29.09.2015
(51) Int. Cl.: F16L 5/02, F16L 5/04, H02G 3/22

(54) **LEITUNGSDURCHFÜHRUNG ZUM DURCHFÜHREN VON LEITUNGEN DURCH EIN BAUTEIL**

(71) Anmelder: HILTI Aktiengesellschaft, 9494 Schaan (LI)
(72) Erfinder: Schulz-Hanke, Wolfgang, 86836 Untermeitingen (DE); Monden, Thomas, 87778 Stetten (DE)
(74) Vertreter: Hilti Aktiengesellschaft Corporate Intellectual Property

(57) **Zusammenfassung**

Die Erfindung betrifft eine Leitungsdurchführung (4) zum Durchführen einer Leitung (3) durch ein Bauteil (1), insbesondere eine Wand oder eine Decke eines Gebäudes, umfassend ein Verschlusselement (5) mit zusammenklappbaren Segmentteilen (51, 51a', 51b') aus einem flexiblen Material, wobei die Segmentteile (51, 51 a', 51 b') beim Zusammenklappen einen ausgefüllten zylindrischen Körper zum Einsatz in eine Durchgangsöffnung (2, 2') des Bauteils (1) ergeben, wobei die Segmentteile (51, 51 a', 51 b') mit einem intumeszierenden flexiblen Material versehen sind.

## Beschreibung

### Technisches Gebiet

Die Erfindung betrifft eine Leitungsdurchführung zum Hindurchführen einer Leitung durch ein Bauteil, insbesondere durch eine Gebäudewand bzw. Gebäudedecke. Insbesondere betrifft die vorliegende Erfindung allgemein Brandschutzmaßnahmen für die Durchführung von Leitungen durch ein Bauteil.

### Technischer Hintergrund

In Gebäuden und Anlagen müssen Leitungen, die durch ein Bauteil, wie z.B. durch eine Wand oder eine Decke, geführt werden, Anforderungen für den Brandschutz genügen. So gehört es zu einer grundlegenden Anforderung, dass Brandgase oder sogar Feuer das Bauteil nicht durchdringen dürfen, d.h. in einem Gebäude nicht von einem Raum in einen nächsten gelangen dürfen.

Aus diesem Grund ist es üblich, bei Leitungsdurchführungen durch Wände der sich zwischen der Leitung und einer Innenwand einer Durchgangsöffnung bestehende Zwischenraum mit einem flexiblen und starren Verfüllmaterial zu verfüllen, wie zum Beispiel mit Mörtel, PU-Steinen, Acrylatdichtmittel, Mineralwolle, insbesondere in Kombination mit Sprühbeschichtungen, und dergleichen.

Im Brandfall können aufgrund einer Hitzentwicklung Spannungen entstehen, die starke mechanische Kräfte zwischen der Wand und der hindurchgeführten Leitung bewirken. Dadurch kann relativer Versatz zwischen der Leitung und der Wand auftreten. Insbesondere kann es auch bei Erdbeben zu erheblichen Verschiebungen zwischen der Leitung und der Wand kommen. Da die Leitung in der Regel mit dem Verfüllmaterial fest verbunden ist, kann sich das Verfüllmaterial durch die auftretenden Spannungen ablösen, reißen oder brechen. Insbesondere eine relative Verschiebung der Leitung senkrecht zur Wand kann zu einem teilweisen oder vollständigen Ablösen des Verfüllmaterials von der Leitung und/oder von der Durchgangsöffnung bzw. zu einem Aufreißen des Verfüllmaterials führen. Durch die dadurch entstehenden Risse und Spalten wird die geforderte Gasundurchlässigkeit beeinträchtigt, so dass Brandgase und Feuer die zuvor gasdichte Durchgangsöffnung überwinden können. Daher ist der bisherige Ansatz des einfachen Verfüllens des Zwischenraums zwischen der Leitung und der Innenwand der Durchgangsöffnung mit einem Verfüllmaterial nicht optimal.

Marktübliche Kabelboxen sehen vor, die Leitung entweder durch eine Kombination aus festem Kunststoff und Abdichtungsmaterial zu führen, wodurch jedoch die relative Beweglichkeit der Leitung erheblich eingeschränkt ist, so dass bei starken Erschütterungen die Beschädigung der Kabelbox nahezu unvermeidlich ist und die Gasdichtigkeit nicht mehr gewährleistet ist.

Weiterhin können intumeszierende Lamellen vorgesehen sein, die zwar eine verbesserte Beweglichkeit der durchgeführten Leitung sicherstellen, aber keine ausreichende Rauchgasdichtigkeit aufweisen.

Ein weiterer Ansatz ist beispielsweise aus der Druckschrift DE 10 2008 000 420 A1 bekannt, in der eine Leitungsdurchführung offenbart ist, die einen geschlossenen Durchführraum für eine Leitung aufweist. Im Gehäuse der Leitungsdurchführung sind eine Einlage aus intumeszierendem Material sowie mindestens ein Dichtelement aus einem elastischen Material vorgesehen, um eine Abdichtung im Brandfall zu erreichen.

Aus der Druckschrift DE 10 2006 000 184 A1 ist eine Leitungsdurchführung zum Durchführen von Leitungen durch ein Bauteil bekannt. Die Leitungsdurchführung weist ein Hüllrohr und ein Basisteil auf, das an dem ersten axialen Ende des Hüllrohres angebracht ist und einen eine Durchführung umgebenden Aufnahmeraum für ein Abschottmittel umfasst. An dem ersten axialen Ende des Hüllrohrs ist weiterhin ein ringförmiges membranartiges Dichtelement angeordnet. An dem zweiten axialen Ende des Hüllrohres ist ein weiteres membranartiges Dichtelement angeordnet, um die Leitungsdurchführung abzudichten.

Es ist eine Aufgabe der vorliegenden Erfindung, eine Leitungsdurchführung bereitzustellen, mit der eine Leitung durch ein Bauteil, wie beispielsweise eine Wand oder eine Decke, geführt werden kann, so dass diese für Rauchgase in einem Brandfall dicht ist. Weiterhin soll eine Toleranz gegenüber Erschütterungen und relativen Verschiebungen zwischen der Leitung und dem Bauteil gewährleistet sein, so dass auch nach einer relativen Verschiebung die Dichtigkeit der Leitungsdurchführung nicht beeinträchtigt ist.

### Offenbarung der Erfindung

Diese Aufgabe wird durch die Leitungsdurchführung gemäß Anspruch 1 sowie durch die Leitungsdurchführungsanordnung gemäß dem nebengeordneten Anspruch gelöst.

Weitere Ausgestaltungen sind in den abhängigen Ansprüchen angegeben.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

Gemäß einem ersten Aspekt ist eine Leitungsdurchführung zum Durchführen einer Leitung durch ein Bauteil, insbesondere eine Wand oder eine Decke eines Gebäudes, vorgesehen. Die Leitungsdurchführung umfasst ein Verschlusselement mit zusammenklappbaren Segmentteilen aus einem flexiblen Material, wobei die Segmentteile beim Zusammenklappen einen insbesondere vollständig ausgefüllten zylindrischen Körper zum Einsatz in eine Durchgangsöffnung des Bauteils ergeben, wobei die Segmentteile mit einem intumeszierenden flexiblen Material versehen sind.

Eine Idee der obigen Leitungsführung besteht darin, dass das Verschlusselement durch eine Anzahl von aneinanderhängend ausgebildeten Segmentteilen ausgebildet ist, die ein flexibles bzw. elastisches Material aufweisen und mit einem sich bei Hitzeeinwirkung stark ausdehnenden Material, wie beispielsweise Blähgraphit und/oder einem intumeszierenden Material oder Stoff, wie z.B. eine chemisch intumeszierende Pulvermischung, versehen ist. Das Verschlusselement kann durch gleichgerichtetes Einklappen der Segmentteile in eine im Wesentlichen zylindrische Form gebracht werden und so in eine entsprechende Durchgangsöffnung mit korrespondierendem Querschnitt in einem Bauteil, wie beispielsweise in eine Wand oder in eine Decke, eingesetzt werden.

Durch das Zusammenklappen treffen sich die abstehenden Enden der Segmentteile in einem Mittenbereich. Durch die Flexibilität des Materials der Segmentteile lässt sich in dem Mittenbereich eine Leitung hindurchführen, wodurch die Enden der Segmentteile zusammengedrückt werden und dadurch eine gute Gasdichtigkeit zwischen der durch die Durchgangsöffnung hindurchgeführten Leitung und dem Verschlusselement erreicht wird.

Weiterhin kann an der Kontaktfläche zwischen der Leitung und dem Verschlusselement eine Gleiteinrichtung z.B. in Form eines Gleitmittels oder eines Gleitmaterials, das gegebenenfalls mit mindestens einem Brandschutzadditiv versetzt ist und/oder brandschutzrelevant modifiziert wurde, vorgesehen werden, um die freie Beweglichkeit der Leitung in ihrer axialen Erstreckungsrichtung der Leitung bzw. senkrecht zur Flächenrichtung des Bauteils zu erreichen.

Weiterhin können die Segmentteile aus einem Glasfasermaterial ausgebildet sein, in das ein elastisches Füllmaterial eingebettet ist.

Es kann vorgesehen sein, dass das elastische Füllmaterial das intumeszierende Material, insbesondere in Form eines Pulvers, Plättchen, Flocken, oder Ähnlichem enthält.

Insbesondere kann das intumeszierende Material auf eine oder mehrere Flächen der Segmentteile als Beschichtung aufgebracht sein.

Es kann vorgesehen sein, dass die Segmentteile durch im Wesentlichen parallel zueinander verlaufende Verbindungsabschnitte miteinander verbunden sind und das Verschlusselement insbesondere einstückig ausgebildet ist. Auf diese Weise kann das Verschlusselement in einfach handhabbarer Weise auf Rollen bereitgestellt werden und die benötigte Anzahl von Segmentteilen durch Durchtrennen an einem entsprechenden Verbindungsabschnitt ausgewählt werden.

Gemäß einer Ausführungsform können die Segmentteile sich von Basisflächen, die jeweils zwischen zwei benachbarten der Verbindungsabschnitte angeordnet sind, verjüngend erstrecken und insbesondere einen dreieckigen oder trapezförmigen Querschnitt bezüglich der Erstreckungsrichtung eines der Verbindungsabschnitte aufweisen.

Weiterhin kann eine Basisfläche, die zwischen jeweils zwei benachbarten Verbindungsabschnitten angeordnet ist, eine konvexe Form aufweist, so dass der zylindrische Körper eine nach außen gekrümmte Mantelfläche aufweist.

Es kann vorgesehen sein, dass die Segmentteile gleichförmig ausgebildet sind.

Alternativ können die Segmentteile verschiedene Querschnitte aufweisen, wobei die Segmentteile miteinander verbunden sind, und sich bezüglich ihrer Querschnitte in einer bestimmten Abfolge wiederholen.

Weiterhin kann eine Leitung zwischen den Segmentteilen insbesondere in einem bezüglich des Verschlusselements zentralen Mittenbereich verlaufen, so dass die Segmentteile teilweise elastisch gestaucht sind, insbesondere an deren einander zugewandten Enden..

Gemäß einer Ausführungsform kann die Leitung von einer Gleitreinrichtung umgeben sein, die insbesondere eine Gleitfilmwicklung und/oder ein Gleitmittel aufweist.

Gemäß einem weiteren Aspekt ist eine Leitungsdurchführungsanordnung vorgesehen, umfassend ein Bauteil mit einer Durchgangsöffnung und die obige Leitungsdurchführung.

Weiterhin kann die Durchgangsöffnung einen runden Querschnitt aufweisen, wobei die Segmentteile gleichartig ausgebildet sind und der zylindrische Körper einen kreisförmigen Querschnitt aufweist.

### Kurzbeschreibung der Zeichnungen

Ausführungsformen werden nachfolgend anhand der beigefügten Zeichnungen näher erläutert. Es zeigen:
- Figur 1: eine perspektivische Darstellung einer Leitungsdurchführung durch eine Wand;
- Figur 2: eine Darstellung eines Abschnitts des Verschlusselementes zum Ausbilden der Leitungsdurchführung der Figur 1;
- Figur 3: eine Draufsicht auf ein zusammengeklapptes Verschlusselement;
- Figur 4: eine perspektivische Darstellung einer weiteren Leitungsdurchführung für eine rechteckige Durchgangsöffnung; und
- Figur 5: eine perspektivische Darstellung eines Abschnitts eines Verschlusselements zum Verschließen der rechteckigen Durchgangsöffnung der Figur 4 im nicht eingeklappten Zustand.

### Beschreibung von Ausführungsformen

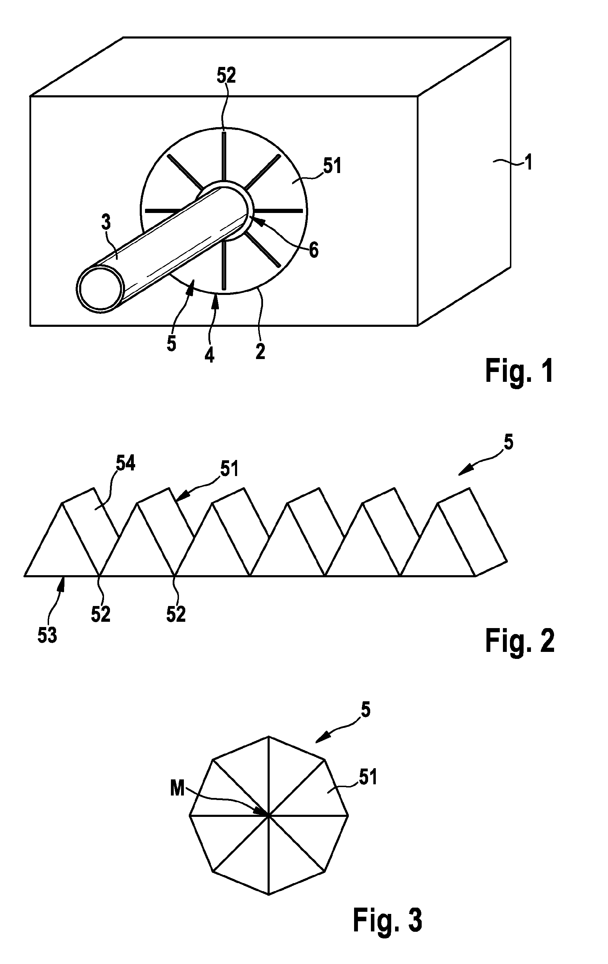

In Figur 1 ist ein Abschnitt einer Wand 1 (oder eines sonstigen Bauteils) mit einer durch die Breite der Wand 1 durchgehenden Durchgangsöffnung 2 dargestellt. Durch die Durchgangsöffnung 2 ist eine Leitung 3 geführt. Die Leitung 3 kann ein Kabel, ein Kabelrohr, eine Rohrleitung, eine Kabeltrasse, ein Lüftungsrohr, eine Lüftungsklappe, oder vergleichbares sein.

Es ist eine Leitungsdurchführung 4 vorgesehen, die zwischen der Leitung 3 und der Innenwand der Durchgangsöffnung 2 angeordnet ist, um eine flexible Bewegung der Leitung 3 in alle Raumrichtungen relativ zum Bauteil bzw. zur Durchgangsöffnung 2 zu ermöglichen. Gleichzeitig soll die Gasdichtigkeit im Brandfall gewährleistet sein, auch wenn beispielsweise durch ein vorausgehendes Erdbeben die Leitung 3 und die Durchgangsöffnung 2 relativ zueinander versetzt worden sind.

In der Durchgangsöffnung 2 befindet sich ein Verschlusselement 5, durch das etwa mittig die Leitung 3 geführt ist. Zwischen dem Verschlusselement 5 und der Leitung 3 befindet sich eine Gleiteinrichtung 6 in Form einer Gleitfilmwicklung, z.B. aus PTFE, und/oder eines pastösen Gleitstoffs und/oder eines Gleitmittels. Die Gleiteinrichtung 6 bewirkt, dass eine relative Bewegung der Leitung 3 in axialer Richtung, d.h. in Erstreckungsrichtung der Leitung 3, z.B. im Fall von Erschütterungen, wie sie bei einem Erdbeben auftreten können, im Wesentlichen keine Kraft von der Leitung 3 auf das Verschlusselement 5 ausgeübt wird.

Das Verschlusselement 5 kann aus einem flexiblen Material ausgebildet sein, so dass auch Kräfte und Bewegungen in Flächenrichtung der Wand 1 durch die Verformbarkeit des Verschlusselements 5 aufgenommen werden können, ohne dass es zu einer Beschädigung des Verschlusselements 5 bzw. zu einer Gasundichtigkeit durch die Durchgangsöffnung 2, z.B. für Rauchgase in einem Brandfall, kommt.

Das Verschlusselement 5 kann mit/aus einem hochflexiblen Material ausgebildet und mit intumeszierenden Materialien versehen sein. Insbesondere kann das Verschlusselement 5 ein Glasfasergewebe aufweisen. Das Glasfasergewebe hat den Vorteil, dass es im Brandfall verglast und damit die Durchgangsöffnung robust und dicht verschließt. Damit sorgt das Glasfasergewebe für eine Gasdichtigkeit vor und zu Beginn der Brandentwicklung.

Das Glasfasergewebe kann mit einem flexiblen Füllmaterial ausgefüllt sein. Das hochflexible Füllmaterial kann als ein nicht brennbares oder schwer entflammbares Material gewählt sein. Das Füllmaterial kann in Form eines Brandschutzschaums oder in Form eines herkömmlichen Bauschaums in Kombination mit Blähgraphit und/oder chemisch intumeszierenden Stoffen, insbesondere pulverförmigen Stoffen vorgesehen sein.

Das hochflexible Material, das in dem Glasfasergewebe eingebettet ist, ermöglicht die freie Beweglichkeit der Leitung z.B. im Falle eines Erdbebens quer zur axialen Erstreckungsrichtung der Leitung 3 bzw. in Flächenrichtung der Wand 1. Ist das Material weiterhin mit einem intumeszierenden Material versehen, dehnt sich dieses bei Brand- bzw. Hitzeeinwirkung aus und kann dadurch die im Feuer schmelzende bzw. brennbare Leitung 3 abdrücken, so dass der Durchtritt von Feuer oder Rauchgasen durch eine etwaig frei werdende Öffnung an der Position der Leitung 3 verhindert wird.

Das Verschlusselement 5 ist zur Montage um die Leitung 3 herum anordbar und kann dann entlang der Leitung 3 in die Durchgangsöffnung 2 der Wand 1 hineingeschoben werden.

In Figur 2 ist das Verschlusselement 5 in einem auseinandergeklappten Zustand vor der Montage dargestellt.

Das Verschlusselement 5 weist mehrere Segmentteile 51 auf, die zueinander benachbart in Reihe angeordnet sind und miteinander über biegbare im Wesentlichen parallel zueinander verlaufende Verbindungsabschnitte 52 verbunden sind, so dass die Segmentteile 51 gegeneinander entlang der Verbindungsabschnitte 52 verschwenkt werden können. Dadurch kann das Verschlusselement 5 insgesamt als einstückiges Element ausgebildet sein. Die Verbindungsabschnitte 52 sind als relativ schmale Bereiche an dem Verschlusselement 5 vorgesehen, so dass das Material des Verschlusselements 5 dort bevorzugt biegbar ist.

Zwischen jeweils zwei Verbindungsabschnitten 52 befindet sich eine Basisfläche 53 der Segmentteile 51, von der Segmentkörper 54 der Segmentteile 51 in eine Richtung quer zur Anordnungsrichtung der Verbindungsabschnitte 52 abstehen. Die Querschnitte der Segmentkörper 54 (bezüglich einer Erstreckungsrichtung der Verbindungsabschnitte 52, d.h. einer axialen Richtung des sich beim Zusammenklappen ausbildenden zylindrischen Körpers) können in Richtung ihrer abstehenden Enden sich verjüngend (bezüglich der Anordnungsrichtung der Verbindungsabschnitte 52) ausgebildet sein.

Die zwischen den Verbindungsabschnitten 52 liegenden Basisflächen 53 der Segmentteile 51 können eben oder konvex ausgebildet sein. Eine konvexe Ausbildung ist vorteilhaft entsprechend einer etwaig runden oder ovalen Querschnittskontur der Durchgangsöffnung 2.

Die Verbindungsabschnitte 52 können zueinander parallel verlaufen. Durch Zusammenklappen der Segmentteile 51 entlang der Verbindungsabschnitte 52 kann nun das Verschlusselement 5 ausgebildet werden. Dabei treffen sich die Segmentkörper 54 der Segmentteile 51 in einem Mittenbereich M, während die Basisflächen 53 eine Außenkontur bilden, die der Querschnittsfläche der Durchgangsöffnung 2 in Form und Größe entspricht und diese möglichst vollständig ausfüllt. Dadurch kann eine Gasdichtigkeit zwischen der Innenwand der Durchgangsöffnung 2 und der äußeren Mantelfläche des zylindrischen Körpers des zusammengeklappten Verschlusselements 5 erreicht werden.

Im in Figur 2 dargestellten Ausführungsbeispiel sind die Segmentteile 51 gleichartig ausgebildet und sind bezüglich ihrer Querschnittsfläche spitz zulaufend, so dass diese annähernd jeweils ein Kreissegment für das auszubildende Verschlusselement 4 bilden.

In Figur 3 ist ein zusammengeklapptes Verschlusselement 5 dargestellt, bei dem die abstehenden Enden der Segmentkörper 54 aneinander anliegen.

Aufgrund der hohen Flexibilität des Materials des Verschlusselements 5 kann in dem Mittenbereich M, in dem die abstehenden Enden der Segmentkörper 54 zusammentreffen, eine Leitung 3 hindurch geführt werden, so dass die hindurchgeführte Leitung 3 die abstehenden Enden der Segmentkörper 54 entsprechend zusammendrückt bzw. staucht und diese somit mit einer Kraft an der Mantelfläche der Leitung 3 anliegen. Dadurch kann eine besondere Dichtigkeit zwischen der Leitung 3 und dem Verschlusselement 5 erreicht werden.

Durch die Gleiteinrichtung 6 wird weiterhin eine Verschiebbarkeit in axialer Erstreckungsrichtung der Leitung 3 durch das Verschlusselement 5 bewirkt.

Das Verschlusselement 5 kann mit intumeszierendem Material durch Einbringen von pulverförmigem intumeszierendem Material in das Glasfasergewebe versehen werden. Alternativ oder zusätzlich kann eine Beschichtung mit intumeszierendem Material ganz oder teilweise auf den Flächen der von den Basisteilen 53 abstehenden Segmentkörper 54 aufgebracht werden.

Im Brandfall bewirkt das intumeszierende Material aufgrund der Hitzeeinwirkung eine Ausdehnung des Volumens des Verschlusselements 5 und ermöglicht es so, dass durch Ausbrennen oder Schmelzen der Leitung 3 frei werdendes Volumen innerhalb der Durchgangsöffnung 2 ausgefüllt wird und somit auch bei einer beschädigten oder zerstörten Leitung 3 die Dichtigkeit durch die Durchgangsöffnung 2 gewährleistet bleibt.

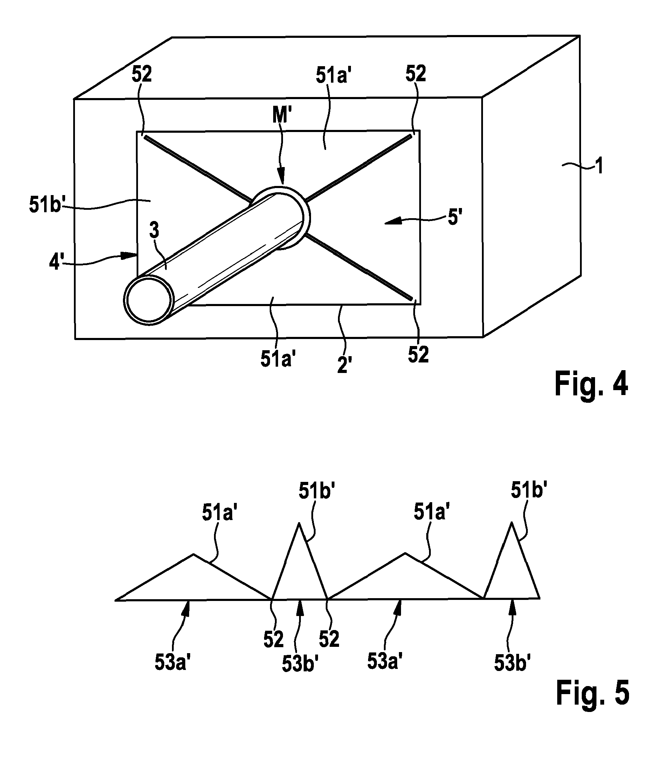

In Figur 4 ist eine weitere Ausführungsform der Leitungsdurchführung 4' dargestellt, bei der die Durchgangsöffnung 2' einen rechteckigen Querschnitt aufweist. Diese Ausführungsform unterscheidet sich von der Ausführungsform der Figur 1 in der Ausbildung des zum Verschließen der Durchgangsöffnung 2' verwendeten Verschlusselements 5'.

Figur 5 zeigt ein Verschlusselement 5', das in der Ausführungsform der Figur 4 eingesetzt werden kann, vor der Montage.

Die Segmentteile 51' des Verschlusselements 5' der Figuren 4 und 5 sind mit verschiedenen Querschnitten ausgebildet. In dem rechteckigen Querschnitt des Verschlusselements 5' kann das Verschlusselement 5' mit vier Segmentteilen 51' ausgebildet sein, von denen ein erstes Segmentteil 51a' eine längere Basisfläche 53a' (in Anordnungsrichtung zwischen den Verbindungsabschnitten 52) und eine geringere Höhe aufweist, während ein zweites Segmentteil 51b' sich daran anschließt und eine kürzere Basisfläche 53b' und eine höhere Höhe jeweils bei dreieckigen Querschnitten aufweist. Somit kann ein Verschlusselement 5' ausgebildet sein, das beim Zusammenklappen die rechteckige Durchgangsöffnung 2' vollständig verschließt, wobei sich die von den Basisflächen 53a', 53b' abstehenden Enden in einer Mittenposition M', durch die die Leitung 3 geführt werden soll, treffen.

## Patentansprüche

1. Leitungsdurchführung (4, 4') zum Durchführen einer Leitung (3) durch ein Bauteil (1), insbesondere eine Wand oder eine Decke eines Gebäudes, umfassend ein Verschlusselement (5, 5') mit zusammenklappbaren Segmentteilen (51, 51a', 51b') aus einem flexiblen Material, wobei die Segmentteile (51, 51a', 51b') beim Zusammenklappen einen ausgefüllten zylindrischen Körper zum Einsatz in eine Durchgangsöffnung (2, 2') des Bauteils (1) ergeben, wobei die Segmentteile (51, 51a', 51b') mit einem intumeszierenden flexiblen Material versehen sind.

2. Leitungsdurchführung (4) nach Anspruch 1, wobei die Segmentteile (51, 51a', 51b') aus einem Glasfasermaterial ausgebildet sind, in das ein elastisches Füllmaterial eingebettet ist.

3. Leitungsdurchführung (4) nach Anspruch 2, wobei das elastische Füllmaterial das intumeszierende Material, insbesondere in Form eines Pulver enthält.

4. Leitungsdurchführung (4) nach Anspruch 2 oder 3, wobei das intumeszierende Material auf eine oder mehrere Flächen der Segmentteile (51, 51a', 51b') in Form einer Beschichtung aufgebracht ist.

5. Leitungsdurchführung (4) nach einem der Ansprüche 1 bis 4, wobei die Segmentteile (51, 51a', 51b') durch im Wesentlichen parallel zueinander verlaufende Verbindungsabschnitte (52) miteinander verbunden sind und das Verschlusselement (5, 5') insbesondere einstückig ausgebildet ist.

6. Leitungsdurchführung (4) nach Anspruch 5 , wobei die Segmentteile (51, 51a', 51b') sich von Basisflächen (53, 53a', 53b'), die jeweils zwischen zwei benachbarten der Verbindungsabschnitte (52) angeordnet sind, verjüngend erstrecken und insbesondere einen dreieckigen oder trapezförmigen Querschnitt bezüglich der Erstreckungsrichtung einer der Verbindungsabschnitte (52) aufweisen.

7. Leitungsdurchführung (4) nach Anspruch 5 oder 6, wobei eine Basisfläche (53, 53a', 53b'), die zwischen jeweils zwei benachbarten Verbindungsabschnitten (52) angeordnet ist, eine konvexe Form aufweist, so dass das Verschlusselement (5, 5') in einem zusammengeklappten Zustand eine gekrümmte Mantelfläche aufweist.

8. Leitungsdurchführung (4) nach einem der Ansprüche 5 bis 7, wobei die Segmentteile (51) gleichförmig ausgebildet sind.

9. Leitungsdurchführung (4) nach einem der Ansprüche 5 bis 7, wobei die Segmentteile (51a', 51b') verschiedene Querschnitte aufweisen, wobei die Segmentteile (51a', 51b') miteinander verbunden sind, und sich bezüglich ihrer Querschnitte in einer bestimmten Abfolge wiederholen.

10. Leitungsdurchführung (4) nach einem der Ansprüche 1 bis 9, wobei eine Leitung (3) zwischen den Segmentteilen (51, 51a', 51b') insbesondere in einem bezüglich des Verschlusselements (5) zentralen Mittenbereich (M, M') verläuft, so dass die Segmentteile (51, 51a', 51b') teilweise elastisch gestaucht sind, insbesondere an deren einander zugewandten Enden..

11. Leitungsdurchführung (4) nach Anspruch 10, wobei die Leitung (3) von einer Gleitreinrichtung (6) umgeben ist, die insbesondere eine Gleitfilmwicklung und/oder ein Gleitmittel aufweist.

12. Leitungsdurchführungsanordnung, umfassend:
- ein Bauteil (1) mit einer Durchgangsöffnung (2);
- eine Leitungsdurchführung (4) nach einem der Ansprüche 1 bis 11.

13. Leitungsdurchführungsanordnung nach Anspruch 12, wobei die Durchgangsöffnung (2, 2') einen runden Querschnitt aufweist, wobei die Segmentteile (51) gleichartig ausgebildet sind und der zylindrische Körper einen kreisförmigen Querschnitt aufweist.
